# EUROPEAN PATENT APPLICATION

(11) **EP 2 492 139 A1**
(43) Date of publication of application: **29.08.2012**
(21) Application number: 11001508.8
(22) Date of filing: 23.02.2011
(51) Int. Cl.: B60N 2/48, B60N 2/427

(54) **Trigger mechanism for an active headrest system and seat back**

(71) Applicant: L & P Swiss Holding AG, 9303 Wittenbach (CH)
(72) Inventor: Samain, Maxime, 8930 Lauwe (BE); Coone, Stefaan, 8560 Wevelgem (BE)
(74) Representative: Banzer, Hans-Jörg

(57) **Abstract**

A trigger mechanism (10) for an active headrest system comprises a support member (11) configured to support upholstery of a seat back (2) of a vehicle seat (1) and a coupling arrangement (13) affixed to the support member (11). The support member (11) has a first side (12) and a second side. The coupling arrangement (13) is configured to pivotably couple the support member (11) to a seat back frame (9) of the vehicle seat (1). A pivot axis (14) defined by the coupling arrangement (13) is spaced from the ends of the first and second sides (12) of the support member (11).

## Description

### FIELD OF THE INVENTION

The invention relates to a trigger mechanism for an active headrest system and to a seat back equipped with the trigger mechanism.

### BACKGROUND OF THE INVENTION

Vehicle seats are relatively complex structures including a combination of subsystems that may be used to position the seat, to provide heating and cooling, or to provide an adjustable lumbar support, in addition to providing a comfortable seating area for occupants. Most importantly, vehicle seats must provide a safe and comfortable seating area. For enhanced safety, vehicle seats may be provided with a passive or active headrest system.

Active headrests may be of different types. One type of active headrest has a headrest linkage that is actuated by the penetration of a person's torso into the seat that engages the linkage and, in turn, causes the headrest to pivot forwardly and optionally also upwardly to reduce the travel of the seat occupant's head in the event of a collision. The risk of so called whiplash-injuries may thereby be reduced. Frequently, the activation of the headrest movement is mechanically triggered by inertia forces exerted by the seat occupant onto the seat. An active headrest system may utilize a mechanical trigger mechanism for initiating movement of the headrest in case of a rear-end collision.

Examples for mechanical triggers are described in EP 2 106 962 A1, DE 10 2006 006 518 B3 or EP 0 967 115 B1. In the trigger mechanism of EP 2 106 962 A, the wire of a Bowden cable mechanism is utilized to detect impact forces in a collision. In the mechanism of DE 10 2006 006 518 B3 or of EP 0 967 115 B1, a mechanical detector is provided in the lower region of the backrest of a vehicle seat and is coupled to a headrest linkage via a Bowden cable. The mechanical detector includes an impact surface and a mechanism for transmitting forces via a Bowden cable to the headrest linkage, which accomplishes movement of at least a portion of the headrest. For illustration, the mechanism of EP 0 967 115 B1 utilizes a pushing member which is slideably received in guide slots and which is coupled to a Bowden cable wire. The Bowden cable wire may be attached to a headrest lever which has a pivot axis.

Using a support member for supporting upholstery of a seat back in the transmission of impact forces is attractive for various reasons. In particular, it may then no longer be required, while still possible, to provide a dedicated impact member for transmitting impact forces to the headrest linkage.

One implementation of a trigger mechanism which utilizes a support member for transmitting impact forces may use a support member which has an upper end connected to the headrest linkage and a lower end which is guided, using a guide recess and/or a guide ramp, along an inclined path. Impact forces occurring in a crash cause the lower end of the support member to slide along the guide recess or guide ramp. This movement of the support member triggers the headrest to move to an activated position. In such a trigger mechanism, significant torques may be exerted onto the support member. In order to ensure that the support member can withstand the torques applied thereon in a rear-end collision, when the active headrest system is triggered, the support member must be designed to have a high rigidity, which may be undesirable in view of costs, comfort and weight.

### BRIEF SUMMARY OF THE INVENTION

There is a continued need in the art for a trigger mechanism for an active headrest system and a seat back equipped with a trigger mechanism which address some of the above needs. In particular, there is a continued need for a trigger mechanism which does not require a support member for seat back upholstery to be over-engineered in terms of wire rigidity so as to withstand excessive torques. There is also a continued need in the art for a trigger mechanism for an active headrest system and a seat back which can be applied to a wide variety of seats, including seats which do not have an actively adjustable support member.

According to an embodiment, a trigger mechanism for an active headrest system is provided. The trigger mechanism comprises a support member and a coupling arrangement. The support member is configured to support upholstery of a seat back of a vehicle seat. The support member has a first side and a second side arranged opposite to the first side, each of the first and second sides respectively having a first end and a second end arranged opposite to the first end. The coupling arrangement is affixed to the support member and is configured to pivotably couple the support member to a seat back frame of the vehicle seat. The coupling arrangement comprises a first pivot coupling portion and a second pivot coupling portion respectively configured to be attached to the seat back frame. The first pivot coupling portion and the second pivot coupling portion define a pivot axis for the support member or a portion of the support member. The coupling arrangement is configured such that the pivot axis is spaced from the first ends of the first and second sides of the support member and from the second ends of the first and second sides of the support member.

The trigger mechanism of the embodiment allows the headrest to be actuated when the support member is displaced. The headrest may thus be actuated also when the lower body of a seat occupant is pressed into a seat due to inertial forces.

In the trigger mechanism of the embodiment, the support member for supporting upholstery of the seat back is configured such that the support member can be pivotably mounted to the seat back frame. The pivot axis is spaced from the first and second ends of the first and second sides of the support member. Therefore, torques exerted onto the first and second sides of the support member when a passenger impacts onto the seat back in a rear-end collision may be kept at more moderate levels as compared to configurations in which the support member rotates about its lowermost end.

The trigger mechanism may have at least one coupling member on which the first pivot coupling portion and the second pivot coupling portion are provided. The at least one coupling member may be attached to the support member via a mount. The mount may be configured such that the support member may rotate relative to the at least one coupling member about an axis defined by the mount and passing through the mount. Thereby, two parallel pivot axes may be realized. This increases the versatility afforded by the trigger mechanism in adjusting the movement of the support member as desired for actuation of the headrest.

The first and second pivot coupling portions may be configured such that, in the installed state of the trigger mechanism in a vehicle seat, the first and second pivot coupling portions are at a level higher than the mount which attaches the at least one coupling member to the support member.

According to another embodiment, a seat back for a vehicle seat is provided. The seat back comprises a seat back frame, a headrest supported by the seat back frame, a trigger mechanism and a headrest linkage. The trigger mechanism comprises a support member and a coupling arrangement. The support member is configured to support upholstery of a seat back of a vehicle seat. The support member has a first side and a second side arranged opposite to the first side, each of the first and second sides respectively having a first end and a second end arranged opposite to the first end. The coupling arrangement is affixed to the support member and couples the support member to a seat back frame of the vehicle seat. The coupling arrangement comprises a first pivot coupling portion and a second pivot coupling portion respectively attached to the seat back frame. The first pivot coupling portion and the second pivot coupling portion define a pivot axis for the support member, so that the support member or a portion of the support member is pivotably attached to the seat back frame. The pivot axis is spaced from the first ends of the first and second sides of the support member and from the second ends of the first and second sides of the support member. The headrest linkage is coupled to both the headrest and the support member. The headrest linkage is configured to displace at least a portion of the headrest from a rest position to an actuated position when the support member pivots about the pivot axis.

The trigger mechanism and the seat back according to embodiments may be utilized for various seats having an actuable headrest. For illustration, the trigger mechanism may be utilized in a vehicle seat.

Embodiments of the invention will be described with reference to the accompanying drawings.

### BRIEF DESCRIPTION OF DRAWINGS

Fig. 1 is a schematic view of a vehicle seat having a trigger mechanism for an active headrest system according to an embodiment.
Fig. 2 is a schematic view of a vehicle seat having a trigger mechanism for an active headrest system according to an embodiment before a force causes a support member of the trigger mechanism to pivot.
Fig. 3 is a schematic view of the vehicle seat of Fig. 2 when the support member of the trigger mechanism is pivoted about a pivot axis.
Fig. 4 is a perspective view of components of a seat back having a trigger mechanism according to an embodiment.
Fig. 5 is a plan view of the seat back of Fig. 4.
Fig. 6 is a detail view of a coupling arrangement of the trigger mechanism in the seat back of Fig. 4.
Fig. 7 is a partially broken away cross-sectional view of the seat back of Figs. 4 and 5 along line VII-VII in Fig. 5, showing the seat back when the headrest is in a rest state.
Fig. 8 is a partially broken away cross-sectional view of the seat back of Figs. 4 and 5 along line VII-VII in Fig. 5, showing the seat back when the headrest is in an activated state.

### DETAILED DESCRIPTION OF EMBODIMENTS

Exemplary embodiments of the invention will be described with reference to the drawings. While some embodiments will be described in the context of specific structural features, such as support members formed as wire pads, the embodiments are not limited to these specific structural features. The features of the various embodiments may be combined with each other unless specifically stated otherwise.

Several embodiments will be described with reference to a trigger mechanism or seat back when the trigger mechanism or seat back are in their installed and operative state. In this context, terms such as "lateral", "upper", "lower", "forward", "rearward" or similar refer to positions given in a vehicle frame of reference. I.e., a "lower" side or end is a side or end facing towards the vehicle base, an "upper" side or end is a side or end facing towards the vehicle roof, and the "lateral" direction is a direction parallel to the vehicle base and orthogonal to the vehicle longitudinal axis. A "forward" direction corresponds to an occupant's viewing direction parallel to center axis of the vehicle seat, and the "rearward" direction is opposite to the "forward" direction.

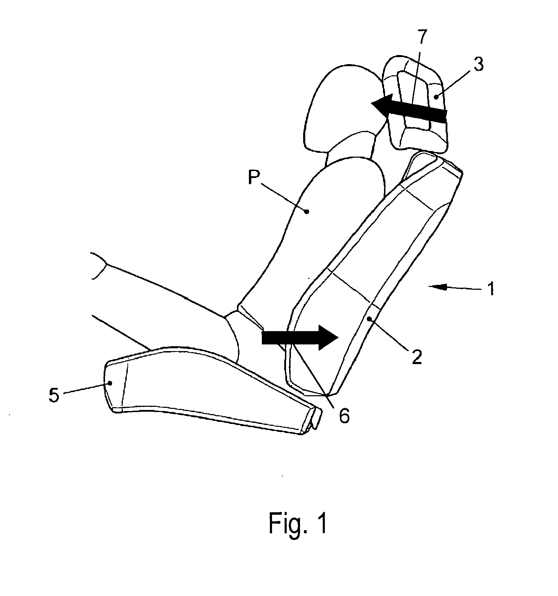

Fig. 1 illustrates a vehicle seat with an active headrest system for providing anti-whiplash protection. The vehicle seat 1 comprises a seat back 2, a headrest 3, and a seat portion 5. As illustrated by the arrows, if a vehicle equipped with the vehicle seat 1 comes into a rear-end collision, a seat occupant P is pushed into the vehicle seat 1 due to inertia forces. In particular, the seat occupant P exerts an inertia force 6 onto a lower end portion of the seat back 2. The inertia force 6 is used to trigger the active headrest system so as to provide anti-whiplash protection. As illustrated, a forward movement 7 of the headrest 3 is triggered. Optionally, the headrest 3 may also be moved in an upward direction. Further, the backrest 2 may optionally be tilted in a backward direction. In this way, the risk of whiplash injuries may be reduced. Generally, the forward movement of the headrest 3 may involve movement of the entire headrest 3 or movement of only a portion of the headrest 3.

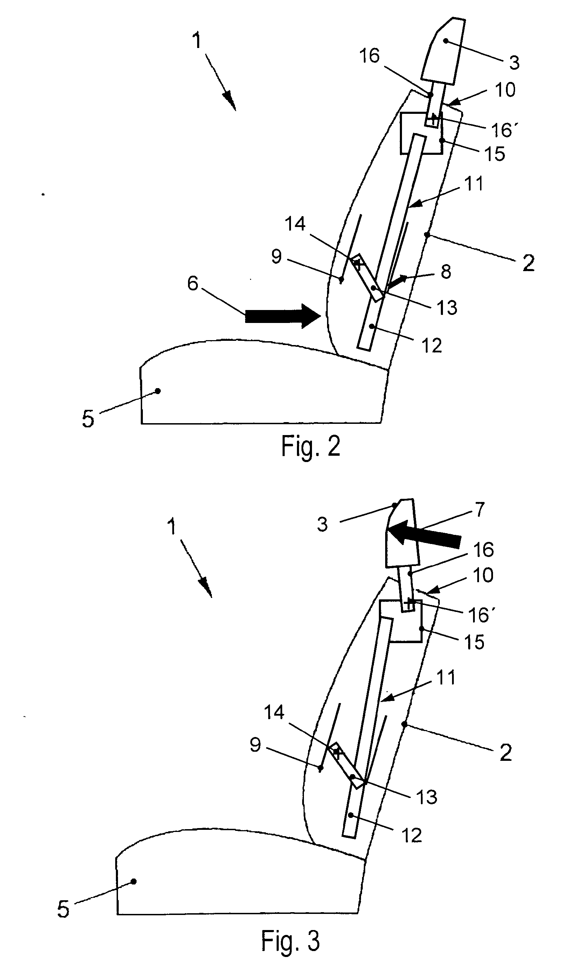

Figs. 2 and 3 are schematic views of a vehicle seat 1 having an active headrest system. The vehicle seat 1 may have a configuration which generally corresponds to the configuration illustrated in Fig. 1, and similar components are designated with the same reference numerals. Fig. 2 shows a state in which the headrest is not activated. Fig. 3 shows a state in which activation of the headrest has been triggered.

The vehicle seat 1 comprises a trigger mechanism 10 for triggering forward movement of the headrest 3 in response to a force 6 exerted onto a lower portion of the seat back 2. The trigger mechanism 10 generally includes a support member 11 and a coupling arrangement 13. The support member 11 has two lateral sides, only one of which is shown at 12 in Figs. 2 and 3. The coupling arrangement 13 is attached to the sides 12 of the support member 11 and couples the support member 11 to side members of a seat back frame such that the support member 11 is pivotable about a pivot axis 14. The coupling arrangement 13 may be attached to the support member 11 so that the support member 11 is pivotable relative to the coupling arrangement 13. Then, a second pivot axis is formed about which the support member 11 can be pivoted relative to the coupling arrangement 13 in a rear-end collision.

The support member 11 provides support of upholstery in the seat back 2 of the vehicle seat 1. The support member 11 may be of any type which is suitable to be suspended in a seat frame, schematically indicated at 9. For example, the support member 11 may be a wire framework comprising a pair of side wires and a plurality of transverse wires extending between the side wires. Further, the support member 11 may also comprise other types of transverse members, e.g. plastic belts. The support member 11 may alternatively be formed of a belt or pad, which may be formed from plastic. The belt or pad may have a substantially plate-like shape.

The seat back 2 of the vehicle seat 1 comprises a headrest linkage 15. The headrest linkage 15 is coupled to an upper end of the sides 12 of the support member 11 and to a headrest bar 16. The headrest linkage 15 translates a pivoting movement of the coupling arrangement 13 and support member 11 about the pivot axis 14 into a forward movement of the headrest 3. For this purpose, the headrest 3 may be pivotably coupled to the seat back 2 via the headrest linkage 15. For illustration, the headrest 3 may be pivotable about a further pivot axis schematically illustrated at 16'. The headrest linkage 15 may comprise a lever mechanism for bringing about the pivoting movement of the headrest 3 in response to a pivoting movement of the support member 11.

The sides of the support member 11 are attached to side members of the seat back frame via a coupling arrangement 13. The coupling arrangement 13 and the support member 11 attached thereto are pivotable about a pivot axis 14 which is defined by pivot coupling portions of the coupling arrangement 13. The pivot axis 14 is spaced from the lower ends of the sides of the support member and from the upper ends of the sides of the support member. A second pivot axis may be formed at the location at which the coupling arrangement 13 is attached to the support member 11, which allows the support member 11 to pivot relative to the coupling arrangement 13.

Various implementations for the coupling arrangement 13 are possible in various embodiments. In one implementation, the coupling arrangement 13 includes a cable or wire which is attached to both sides of the support member 11 and extends laterally from the support member 11 on both sides. The pivot coupling portions may then be formed on the cable, using, for example, hooks or other features which, when engaged with mating features on the seat back frame, allow the support member 11 to pivot relative to the seat back frame when a force is exerted onto the lower end of the support member 11. The wire or cable may be attached to the support member 11 using mounts which allow the support member 11 to pivot about the wire or cable. Alternative configurations of the coupling arrangement 13 may be implemented in other embodiments. For illustration, the coupling arrangement 13 may include hinges which are articulated to the seat frame and thereby define a pivot axis extending in a transverse direction of the seat back, spaced from the lower and upper end of the support member 11.

As will be appreciated from Figs. 2 and 3, the trigger mechanism 10 comprises the support member 11 and the coupling arrangement 13. In use of the trigger mechanism 10, the support member 11 supports upholstery of the seat back 2 of the vehicle seat 1 and is engaged with the headrest linkage 15. The support member 11 has a first side and a second side arranged opposite to the first side. In the installed state, the first and second sides of the support member 11 correspond to the lateral sides of the support member 11. The first side and second side respectively have a first end and a second end arranged opposite to the first end. In the installed state, the first end may represent an upper end of the sides and the second end may represent a lower end of the sides. The coupling arrangement 13 is affixed to the support member 11 and configured to pivotably couple the support member 11 to the seat back frame of the vehicle seat 1. The coupling arrangement 13 comprises a first pivot coupling portion and a second pivot coupling portion respectively configured to be attached to the seat back frame. The first pivot coupling portion and the second pivot coupling portion define the pivot axis 14 for the support member 11, which is spaced from the first ends of the first and second sides of the support member and from the second ends of the first and second sides of the support member.

In this trigger mechanism 10, actuation of the headrest 3 in a collision is triggered when the inertia force 6 causes the support member 11 to pivot. The pivoting movement of the support member 11 in response to the force 6 is schematically illustrated at 8. The pivot axis 14 is arranged such that it is spaced from the lower and upper ends of the first and second sides of the support member 11, respectively. The pivot axis 14 is located above the location where the coupling arrangement 13 is attached to the support member 11. Thereby, the torque which the support member 11 must withstand when actuating the headrest 3 in a collision may be kept at more moderate levels. The seat back 2 may be configured such that the support member 11 starts pivoting only if the torque exerted thereon by the force 6 acting onto the seat back 2 exerts a predefined threshold.

While a configuration in which an upper end of the support member 11 pivots forward in response to the force 6 is illustrated in Figs. 2 and 3, the trigger mechanism may be configured to implement other movements of the support member 11. The movement of the support member 11 resulting when a force is exerted may be controlled using additional couplings between the support member 11 and the seat back frame, or by appropriately positioning the axis 14 and the location at which the coupling arrangement 13 is attached to the support member 11. Additionally or alternatively, the coupling arrangement 13 may be attached to the support member 2 such that the support member 11 may pivot relative to the coupling arrangement 13. The trigger mechanism may then also be configured such that the upper end of the support member is pivoted in a rearward direction when a force 6 acts onto the support member 11. For illustration, a force acting onto the support member 11 at a position intermediate between the pivot axis 14 and the location at which the coupling arrangement 13 is attached to the support member 11 may give rise to a rearward movement of the upper end of the support member 11.

As illustrated in Figs. 2 and 3, the coupling arrangement 13 may be configured such that the pivot axis 14 is spaced from a plane defined by the first side and the second side of the support member 11, in a direction perpendicular to the plane. The coupling arrangement 13 may further be configured such that a second plane orthogonal to the plane defined by the first side and the second side of the support member 11 and passing through the pivot axis 14 intersects the first side and the second side of the support member at a location which is spaced from both the first end and the second end of the respective side. The pivot axis 14 may be disposed above the location at which the coupling arrangement 13 is attached to the support member, with the height determined relative to a ground plane of the vehicle seat or vehicle.

In the installed state, the upper (first) ends of the first and second sides of the support member 11 may be engaged with the headrest linkage 15.

The coupling arrangement 13 may comprise at least one coupling member on which the first pivot coupling portion and the second pivot coupling portion are provided. The at least one coupling member may extend from the support member 11 in a direction generally transverse to the first side and the second side. Thereby, the trigger mechanism 10 may be implemented using a support member which is attached to the seat back frame at its lateral sides.

The at least one coupling member may be affixed to the first side of the support member 11 at a first location spaced from both the first end and the second end of the first side. The first pivot coupling portion may be offset relative to the first location in a direction parallel to the first side, as seen in Figs. 2 and 3.

The first pivot coupling portion and the second pivot coupling portion may both be provided on one coupling member. The one coupling member may be affixed to both the first side and the second side of the support member 11. Thereby, the number of separate components of the trigger mechanism 10 as well as installation time and costs for the trigger mechanism 10 may be kept moderate.

The one coupling member may comprise a cable or wire. The cable or wire may be formed from metal. The cable or wire may have a thickness selected such that the ultimate tensile strength of the wire or cable is equal to or greater than 800 N. The cable or wire may be guided across the support member 11, so as to extend between the first side and the second side on the rear side of the support member 11.

The at least one coupling member may be attached to the first side and/or to the second side using a mount which may be configured as a clip. The clip may have a recess in which a portion of one of the first side or the second side is received. Thereby, the support member 11 may be pivotably attached to the seat back frame using a coupling arrangement 13 having a simple configuration. The mount may be such that it allows the wire or cable and the support member 11 to pivot about an axis passing through the mount.

The support member 11 may comprise a first side wire defining the first side and a second side wire defining the second side. The support member may be configured as a wire pad, in particular as a so-called horizontal wire pad which is attached to the seat back frame at its lateral sides. The support member 11 may comprise a plurality of transverse wires extending between the first side wire and the second side wire.

As illustrated in Figs. 2 and 3, the seat back 2 for the vehicle seat 1 according to an embodiment comprises the seat back frame, the headrest 3 supported by the seat back frame, the headrest linkage 15 and the trigger mechanism 10 of any one aspect or embodiment of the invention. The first pivot coupling portion and the second pivot coupling portion are engaged with the seat back frame, such that the support member 11 is pivotably coupled to the seat back frame. The headrest linkage 15 is coupled to both the headrest 3 and the support member 11, such that at least a portion of the headrest 3 is displaced from a rest position to an actuated position when the support member 11 pivots about the pivot axis 14 in response to the inertia force 6.

The seat back 2 may comprise upholstery supported by the support member 11. The headrest may comprise a headrest bar 16. The headrest linkage 15 may be coupled to the headrest bar 16 so as to tilt the headrest bar 16 in a forward direction when the inertia force 6 is exerted onto a lower portion of the seat back in the rearward direction. The headrest linkage 15 may be configured to tilt the headrest bar 16 in the forward direction only if the force 6 exceeds a threshold.

The seat back 2 may comprise a bias member (not shown in Figs. 2 and 3) biasing the support member 11 into a rest position as shown in Fig. 2. The trigger mechanism 10 may be configured such that the support member is pivoted, against a torque exerted thereon by the bias member, by the force 6 applied to the seat back in a collision.

The headrest linkage 15 may comprise a linkage member which is articulated to the seat frame. The first end of the first side and the first end of the second side of the support member 11 may be engaged with the linkage member. This allows the pivoting movement of the support member 11 to be transferred onto the headrest 3 via the headrest linkage 15.

The seat back frame may have a first side member and a second side member. The support member 11 may extend between the first side member and the second side member and may be flexibly attached to the first side member and the second side member via the coupling arrangement 13. Only one coupling member may extend from the first side of the support member 11 to the first side member of the seat back frame. Only one coupling member may extend from the second side of the support member 11 to the second side member of the seat back frame. Thereby, a pivotable attachment of the support member on the seat back frame may be facilitated.

The seat back 2 may comprise an actuator (not shown in Figs. 2 and 3) coupled to the support member 11. The actuator may be coupled to the coupling arrangement 13 to adjust the support member. The actuator may be configured to adjust a tension in a cable or wire comprised by the coupling arrangement 13. The actuator may be self-locking when the force 6 is applied to the seat back 2 in a collision. Using the actuator, the seat back 2 may provide an adjustable lumbar support. The self-locking configuration of the actuator ensures that the force 6 exerted onto the support member 11 in a collision is transmitted to the headrest linkage 15 for actuation of the headrest 3.

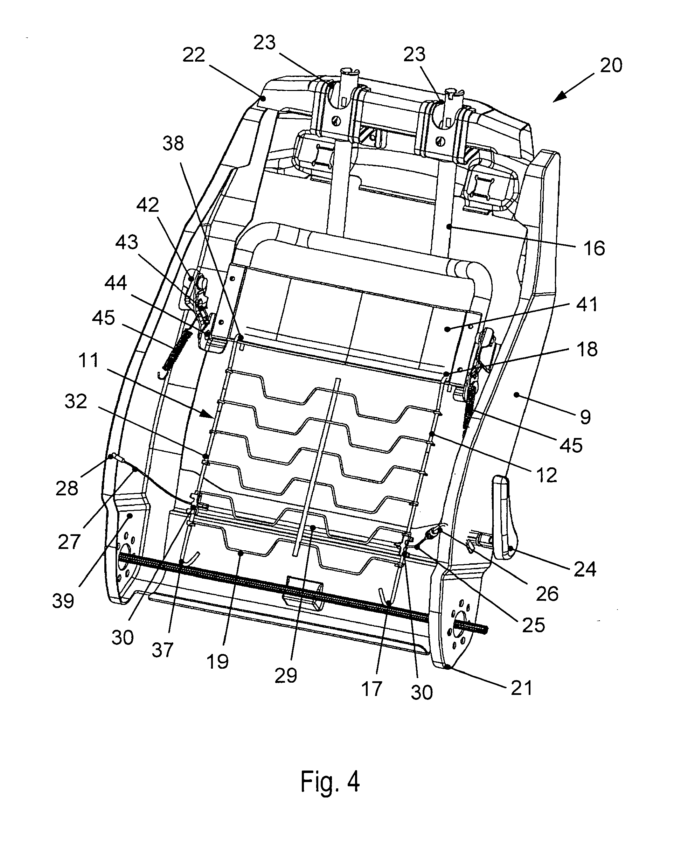

Referring now to Figs. 4-8, a seat back having an active headrest system and a trigger mechanism according to an embodiment will be described in more detail. While the upholstery of the seat back and the headrest cushion are not shown for clarity, the seat back may include such upholstery and a headrest cushion. Elements or arrangements which correspond, with regard to their configuration and operation, to elements or arrangements explained with reference to Figs. 1-3 are designated with the same reference numerals. Fig. 4 shows a perspective view of the seat back.

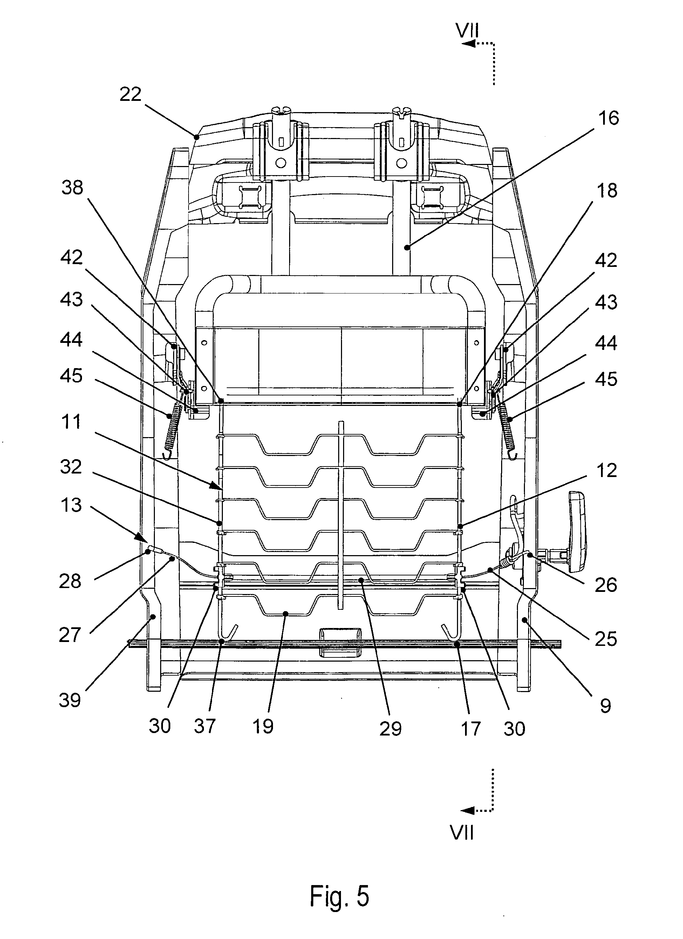

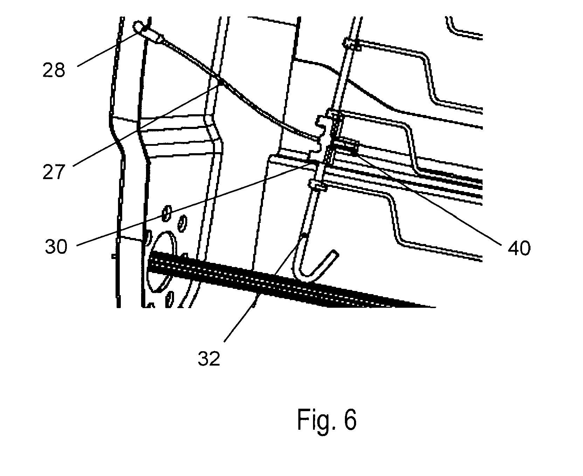

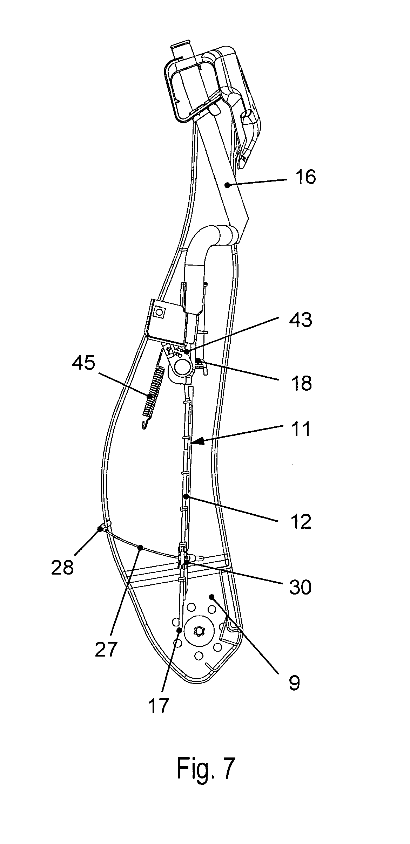

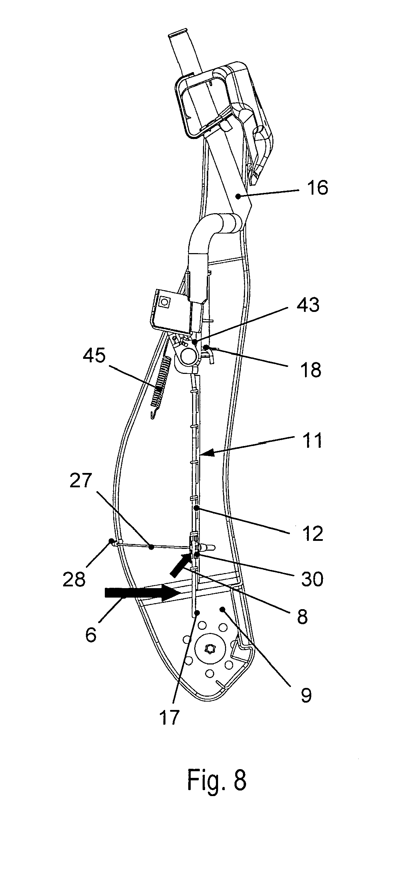

Fig. 5 shows a plan view of the seat back. Fig. 6 shows a detail view of a coupling arrangement which pivotably attaches a support member to a seat back frame. Fig. 7 shows a cross-sectional view taken along line VII-VII of Fig. 5 when no force is exerted onto the support member and the headrest is in its rest position. Fig. 8 shows a cross-sectional view taken along line VII-VII of Fig. 5 when the torque exerted onto the support member exceeds a pre-defined threshold, causing the headrest to be displaced to its active position.

The seat back 20 includes a seat back frame 21, a headrest supported on the seat back frame 21 via one or several headrest bars 16, a trigger mechanism which includes a support member 11 and a coupling arrangement which attaches the support member 11 to the seat back frame 21 so that the support member 11 is pivotable about a pivot axis, and a headrest linkage. The headrest linkage is coupled between the upper end of the support member 11 and the lower end of the headrest bars 16 and causes the headrest bars 16 to pivot in a forward direction when the lower end of the support member 11 pivots about the pivot axis in a rearward direction.

The seat back frame 21 has a first side member 9, a second side member 39 and a cross member 22. Guide through holes 23 are provided in the cross member 22. The headrest bars 16 extend through the guide through holes 23. The guide through holes 23 are dimensioned so as to allow the headrest bars to move therein when the headrest linkage causes the headrest bars 16 to pivot in response to a pivoting movement of the support member 11. An actuator 24 may be supported on the seat back frame 21. The actuator 24 may be a manual actuator or a power actuator. The actuator may be operatively coupled to the support member to provide adjustable lumbar support. The actuator 24 may also be arranged separate from the seat back frame 21.

The support member 11 is interposed between the first side member 9 and the second side member 39. In the illustrated implementation, the support member 11 is configured as a wire framework. As mentioned above, other configurations of the support member 11 may be implemented in further embodiments. The support member 11 has a first side wire 12 and a second side wire 32. The first side wire 12 and the second side wire 32 are arranged on the lateral sides of the support member 11. The first side wire 12 and the second side wire 32 are arranged so as to be parallel to each other. A plurality of transverse wires 19 extends between the first side wire 12 and the second side wire 32 in a direction generally transverse to the direction of the first side wire 12 and the second side wire 32. The support member 11 may include additional wires extending in parallel with the first side wire 12 and the second side wire 32, such as a center wire, as illustrated in Figs. 4 and 5. The transverse wires 19 may be attached to the first side wire 12 and the second side wire 32 using any suitable technique. For illustration, the transverse wires 19 may be wound around the side wires 12 and 32 at their ends. The support member 11 provides support for the upholstery of the seat back 20 (not shown in Figs. 4-8). Other configurations of support members may be used. For illustration, a support member having one or several plastic belts extending between its first and second sides may be used.

The first side wire 12 has a first end 18 which, in the installed state of the support member 11, is the upper end of the first side wire 12. The first side wire 12 has a second end 17 which, in the installed state of the support member 11, is the lower end of the first side wire 12. The second side wire 32 has a first end 38 which, in the installed state of the support member 11, is the upper end of the second side wire 32. The second side wire 32 has a second end 37 which, in the installed state of the support member 11, is the lower end of the second side wire 32.

The first end 18 of the first side wire 12 and the first end 38 of the second side wire 32 are engaged with a linkage plate 41 of the headrest linkage, which will be explained in more detail below. The second ends 17 and 37 of the first and second side wires 12 and 32, respectively, may be free, as illustrated in Figs. 4 and 5, or may be coupled with a guide member, such as a guide recess or guide ramp mounted on or integrally formed with the seat back frame 21.

The support member 11 is pivotably attached to the seat back frame 21 via a coupling arrangement. In the seat back illustrated in Figs. 4-8, the coupling arrangement includes a cable or wire 13 formed of a metal material. The cable or wire 13 may be configured so as to have an ultimate tensile strength of at least 800 N and, in particular, of at least 1300 N. For illustration, a metal cable 13 having a diameter of at least 1 mm, e.g. of approximately 1.5 mm, may be used.

The cable or wire 13 is attached to the first side wire 12 and to the second side wire 32 of the support member 11 via clips 30. An end portion 25 of the cable or wire 13 extends from the first side wire 12 to the first side member 9 of the seat back frame 21. A first pivot coupling portion 26 is provided on the end portion 25 and is engaged with the first side member 9 of the seat back frame 21. Another end portion 27 of the cable or wire 13 extends from the second side wire 32 to the second side member 39 of the seat back frame 21. A second pivot coupling portion 28 is provided on the other end portion 27 and is engaged with the second side member 39 of the seat back frame 21. The pivot coupling portions 26, 28 may have various configurations. For illustration rather than limitation, the pivot coupling portions 26, 28 may be configured as hooks which are received in mating recesses of the seat back frame 21. For further illustration, the pivot coupling portions 26, 28 may be configured to respectively receive a projection formed on the seat back frame 21, so as to be rotatable relative to the seat back frame 21. The virtual line passing through the first pivot coupling portion 26 engaged with the seat back frame and through the second pivot coupling portion 28 engaged with the seat back frame defines the pivot axis about which the support member 11 may pivot relative to the seat back frame.

The pivot axis defined by the first pivot coupling portion 26 and the second pivot coupling portion 28 extends parallel to the plane defined by the first side wire 12 and the second side wire 32. The pivot axis is offset from the plane and is positioned forwardly of the plane in which the support member 11 is arranged. Further, as best seen in Figs. 7 and 8, the end portions 25, 27 of the cable or wire 13 extend from the location at which they are respectively connected to the associated side wire not only in a transverse and forward direction. The distance vector from the location at which the end portion 25 or 27 is affixed to the associated side wire 12 or 32, respectively, to the pivot coupling portion 26 or 28, respectively, has a component extending parallel to the side wires 12 and 32. This allows one to adjust the height of the pivot axis above the lower end of the seat back 2 such that a major part of the force acting upon the support member 11 in case of a rear-end collision will be applied to the support member 11 in a region located lower than the pivot axis.

In the implementation illustrated in Figs. 4-8, the end portion 25 of the cable or wire 13 serves as a coupling member which is affixed to the first side wire 12 of the support member 11 and which is pivotably attached to the associated side member 9 of the seat back frame 21. The end portion 27 of the cable or wire 13 serves as a coupling member which is affixed to the second side wire 32 of the support member 11 and which is pivotably attached to the associated side member 39 of the seat back frame 21. In implementations, the seat back 20 does not include any other elements which directly connect the sides of the support member to the seat back frame.

Referring to Fig. 6, the attachment clip 30 is shown in greater detail. The attachment clip includes a longitudinal recess in which the associated side wire 32 is received. The clip 30 also has a guide recess 40 for guiding a central part 29 of the cable or wire 13 along the rear side of the support member 11. The central part 29 of the cable or wire 13 is guided along the support member 11, between the clip 30 at which the cable or wire 13 is attached to the first side wire 12 and the clip 30 at which the cable or wire 13 is attached to the second side wire 32.

The clip 30 may be configured such that the cable or wire 13 is rotatable relative to the clip 30. This allows the support member 11 on which the clips 30 are attached to pivot relative to the cable or wire 13 about an axis passing through the two clips 30. Similarly, other mounts may be used to attach the cable or wire 13 to the opposite first and second sides of the support member 11 while allowing the support member 11 to pivot relative to the cable or wire 13 about an axis passing through the mounts.

Referring again to Figs. 4 and 5, the headrest linkage includes the linkage plate 41 which is articulated to the seat back frame 21 via two lever arrangements. The two lever arrangements are mirror-symmetric relative to each other. Each one of the lever arrangements includes a bracket 42 attached to a side member of the seat back frame 21, another bracket 44 attached to the linkage plate 41, and a lever 43 extending between the bracket 42 attached to the side member of the seat back frame 2 and the other bracket 44 attached to the linkage plate 41. The lever 43 is hinged to both brackets 42, 44, so as to form a hinged coupling between the linkage plate 41 and the associated side member of the seat back frame 21. The lever 43 and brackets 42, 44 may be configured such that an angular movement of the support member 11 to a state where the support member 11 has been maximally displaced from its rest state translates into a desired movement of the headrest attached to the headrest bars 16.

The first, i.e., upper, end 18 of the first side member 12 and the first end 38 of the second side member 32 is attached to the linkage plate 41. The first ends 18, 38 of the first and second side member 12, 32 may be attached to the linkage plate 41 in any suitable manner which ensures that the linkage plate 41 is displaced together with the first ends 18, 38 when the support member 11 pivots about the pivot axis. The linkage plate 41 is coupled to the headrest bars 16 so as to cause the headrest bars 16 to move when the linkage plate 41 is displaced by the pivoting movement of the support member 11.

Bias members 45 are provided to bias the headrest linkage and, thus, the support member 11 into a rest position. The bias members 45 may be configured as, or may include, springs or other resilient members. The bias members 45 may be attached to the lever 43 of the headrest linkage.

Referring now to Figs. 7 and 8, operation of the trigger mechanism and active headrest system of the seat back 20 will be explained in more detail. Fig. 7 shows a cross-sectional view of the seat back 20 in a rest state. Fig. 8 shows a cross-sectional view of the seat back 20 after a force 6 acting onto the lower portion of the support member 11 has caused the support member 11 to pivot about the pivot axis defined by the points at which the pivot coupling portions 26 and 28 are hingedly coupled to the seat back frame.

The force 6 acting onto the lower portion of the support member 11 exerts a torque relative to the pivot axis. The torque causes the support member 11 to pivot about the pivot axis to the configuration illustrated in Fig. 8. The pivoting movement of the support member 11 about the pivot axis is schematically illustrated at 8 in Fig. 8. The support member 11 pivots about the pivot axis only when the force 6 exerts a torque onto the support member 11 which overcomes the torque exerted onto the support member 11 by the bias members 45. The bias members 45 are selected such that forces which will typically occur in rear-end collisions will always trigger the pivoting movement of the support member 11.

The first end 18 of the side wire 12 is displaced in an upward and forward direction as the support member 11 pivots about the pivot axis. The resultant displacement of the linkage plate 41 displaces the headrest bars 16, thereby effecting a forward movement of the headrest.

The trigger mechanism as explained with reference to Figs. 4-8 may not only be implemented in a seat back which has a support member 11 which is adjustable using an actuator, but may also be used if there is no actuator for adjusting the support member 11.

It an actuator is provided for adjusting the support member 11, the cable 13 for pivotably attaching the support member 11 to the seat back frame 21 may also be coupled to the actuator, so that the configuration of the support member 11 may be adjusted via a tension in the cable 13. In this case, the actuator may have a self-locking configuration, which prevents that a pulling force acting onto the cable 13 plays out a wire or cable from the actuator. Thereby, the force 6 acting onto the support member 11 can reliably trigger the active headrest system.

While trigger mechanisms and seat backs according to embodiments have been described in detail with reference to the drawings, modifications thereof may be implemented in further embodiments. For illustration, additional mechanisms may be integrated into the seat back to implement additional functionalities. Such mechanisms may include a mechanism for automatically reclining the seat back when a rear-end collision occurs.

For further illustration, while trigger mechanisms have been described in which the coupling arrangement is formed by a single cable or wire which pivotably couples the first side of the support member to the first side member of the seat back frame and the second side of the support member to the second side member of the seat back frame, separate coupling members may be provided in further embodiments. Further, the coupling arrangement does not need to utilize a cable or wire for pivotably attaching the support member to the seat back frame. For illustration, hinges may be provided to couple the side of the support member to the associated side member of the seat back frame. The hinges may include rigid levers articulated to the seat back frame.

For further illustration, while trigger mechanisms have been described in which the coupling arrangement is formed by a single cable or wire, plural cables or wires may be provided at locations offset along the longitudinal axis of the seat back to pivotably couple the seat back to the seat frame.

For further illustration, while trigger mechanisms have been described in which the support member is configured as a wire framework having a first side wire and a second side wire and transverse wires extending therebetween, the support member may have a wide variety of different configuration. For illustration, end fingers of the transverse wires may extend outwardly beyond the first and second side wires. The support member may alternatively or additionally comprise other types of transverse members, e.g. plastic belts. The support member may alternatively be formed of an extended belt or pad, which may be formed from plastic. The belt or pad may have a substantially plate-like shape.

For further illustration, while trigger mechanisms have been described which are configured such that an upper end of the support member is caused to move in a forward direction when a rear-end collision occurs, other configurations may be used. For illustration, the trigger mechanism may be configured such that an upper end of the support member is caused to move in a rearward direction when a rear-end collision occurs. The configuration of the trigger mechanism may be selected in dependence of the configuration of the headrest linkage.

For further illustration, while seat backs have been described in which a headrest linkage includes a lever arrangement which displaces a headrest bar in response to a pivoting movement of the support member, alternative configurations may be utilized in further embodiments. For illustration, the headrest linkage may be configured to effect a translatory, rotatory or combined translatory and rotatory displacement of headrest bars. The headrest linkage may not be coupled to the headrest bars, but may be configured to displace a part of the headrest only, rather than causing displacement of the full headrest.

Exemplary embodiments of the invention may be utilized in a wide variety of seats, in particular in vehicle seats for automotive seating, without being limited thereto.

## Claims

1. A trigger mechanism for an active headrest system, comprising:
a support member (11) configured to support upholstery of a seat back (2; 20) of a vehicle seat (1), said support member (11) having a first side (12) and a second side (32) arranged opposite to said first side (12), each of said first and second sides (12, 32) respectively having a first end (18, 38) and a second end (17, 37) arranged opposite to said first end (18, 38), said support member (11) being configured to be engaged with a headrest linkage (15; 41-44), and
a coupling arrangement (13) affixed to said support member (11) and configured to pivotably couple said support member (11) to a seat back frame (21) of said vehicle seat (1), said coupling arrangement (13) comprising a first pivot coupling portion (26) and a second pivot coupling portion (28) respectively configured to be attached to said seat back frame (21),
said first pivot coupling portion (26) and said second pivot coupling portion (28) defining a pivot axis (14) for at least a portion of said support member (11), said coupling arrangement (13) being configured such that said pivot axis (14) is spaced from said first ends (18, 38) of said first and second sides (12, 32) of said support member (11) and from said second ends (17, 37) of said first and second sides (12, 32) of said support member (11).

2. The trigger mechanism of claim 1,
said coupling arrangement (13) comprising at least one coupling member (13) on which said first pivot coupling portion (26) and said second pivot coupling portion (28) are provided, said at least one coupling member (13) extending from said support member (11) in a direction transverse to said first side (12) and said second side (32).

3. The trigger mechanism of claim 2, comprising
at least one mount (30) to attach said at least one coupling member (13) to said support member (11) such that said support member (11) and said coupling member (13) are pivotable relative to each other.

4. The trigger mechanism of claim 2 or 3,
said at least one coupling member (13) being affixed to said first side (12) at a first location spaced from both said first end (18) and said second end (17) of said first side (12), said first pivot coupling portion (26) being offset relative to said first location in a direction parallel to said first side (12).

5. The trigger mechanism of any one of claims 2-4,
said first pivot coupling portion (26) and said second pivot coupling portion (28) being provided on one coupling member (13), said one coupling member (13) being affixed to both said first side (12) and said second side (32) of said support member (11).

6. The trigger mechanism of claim 5,
said one coupling member (13) comprising a wire or cable.

7. The trigger mechanism of any one of claims 2-6,
said at least one coupling member (13) being attached to at least one of said first side (12) and said second side (32) using a mount (30), said mount (30) having a recess in which a portion of one of said first side (12) and said second side (32) is received.

8. The trigger mechanism of any one of the preceding claims,
said coupling arrangement (13) being configured such that said pivot axis (14) is spaced from a plane defined by said first side (12) and said second side (32) in a direction perpendicular to said plane.

9. The trigger mechanism of any one of the preceding claims,
said support member (11) comprising a first side wire (12) defining said first side and a second side wire (32) defining said second side of said support member (11).

10. A seat back for a vehicle seat comprising:
a seat back frame (21);
a headrest (3, 16) supported by said seat back frame (21);
the trigger mechanism (10) of any one of the preceding claims, said first pivot coupling portion (26) and said second pivot coupling portion (28) being engaged with said seat back frame (21), such that said support member (11) is pivotably coupled to said seat back frame (21); and
a headrest linkage (15; 41-44) coupled to both said headrest (3, 16) and said support member (11), said headrest linkage (15; 41-44) being configured to displace at least a portion of said headrest (3, 16) from a rest position to an actuated position when said support member (11) pivots about said pivot axis (14).

11. The seat back of claim 10, further comprising
a bias member (45) biasing said support member (11) into a rest position, said trigger mechanism (10) being configured such that said support member (11) is pivoted, against a torque exerted thereon by said bias member (45), by a force applied to said seat back in a collision.

12. The seat back of claim 10 or 11,
said headrest linkage (15; 41-44) comprising a linkage member (41) which is articulated to said seat back frame (21), said first end (18) of said first side (12) and said first end (38) of said second side (32) of said support member (11) being engaged with said linkage member (41).

13. The seat back of any one of claims 10-12,
said seat back frame (21) having a first side member (9) and a second side member (39), said support member (11) extending between said first side member (9) and said second side member (39) and being flexibly attached to said first side member (9) and said second side member (39) by said coupling arrangement (13).

14. The seat back of any one of claims 10-13, further comprising
an actuator (24) coupled to said support member (11), said actuator (24) being coupled to said coupling arrangement (13) to adjust said support member (11), said actuator (24) being self-locking when a force is applied to said seat back (2; 20) in a collision.

15. A vehicle seat comprising the seat back (2; 20) of any one of claims 10-14.
